# EUROPÄISCHE PATENTANMELDUNG

(11) **EP 4 703 813 A1**
(43) Veröffentlichungstag der Anmeldung: **04.03.2026**
(21) Anmeldenummer: 24197951.7
(22) Anmeldetag: 02.09.2024
(51) Int. Cl.: G05B 13/04, G06F 30/28, H01M 4/04

(54) **BESTIMMUNG OPTIMIERTER BETRIEBSPARAMETER FÜR EINEN BESCHICHTUNGSPROZESS**

(71) Anmelder: Siemens Aktiengesellschaft, 80333 München (DE)
(72) Erfinder: PASCH, Theresa, 80799 München (DE); MALIK, Vincent, 80636 München (DE); MAUSER, Hans, 81739 München (DE); PILS, Jonas, 91054 Erlangen (DE); KARL, Stephan, 85072 Eichstätt (DE); NEHMEIER, Marco, 91486 Uehlfeld (DE); DIEHM, Ralf, 7687 Karlsruhe (DE); WITTUM, Christian, 75045 Walzbachtal (DE); STÖRNER, Patrick, 76227 Karlsruhe (DE)
(74) Vertreter: Siemens Patent Attorneys

(57) **Zusammenfassung**

Die Erfindung betrifft ein computer-implementiertes Verfahren, eine computer-implementierte Vorrichtung, ein System und ein Computerprogrammprodukt zum Bestimmen optimierter Betriebsparameter für einen Beschichtungsprozess umfassend ein Erfassen zumindest eines mit dem Beschichtungsprozess assoziierten Prozessparameters, Bestimmen eines mit einer Beschichtung, welche durch den Beschichtungsprozess hergestellt wird, assoziierten Soll-Parameterbereichs, wobei das Bestimmen auf einem analytischen Modell und/oder einem dreidimensionalen computational fluid dynamics, CFD, Modell basiert und ein Bestimmen eines Betriebsparameters für den Beschichtungsprozess zumindest teilweise basierend auf dem erfassten Parameter und dem Soll-Parameterbereich.

## Beschreibung

Die vorliegende Erfindung betrifft ein computer-implementiertes Verfahren, eine computer-implementierte Vorrichtung, ein System und ein Computerprogrammprodukt zum Bestimmen optimierter Betriebsparameter für einen Beschichtungsprozess.

Die derzeit stattfindende Energiewende, welche die Abkehr von der Verbrennung fossiler Brennstoffe hin zur Verwendung regenerativer und nachhaltiger Rohstoffe umfasst, erfordert in vielerlei Hinsicht die Weiterentwicklung und/oder Neuentwicklung energieerzeugender Medien und/oder energiespeichernder Medien. Dies kann z.B. die Weiterentwicklung von Batterien (als Energiespeichermedien) und/oder von Brennstoffzellen als Energieerzeugungsmedium umfassen.

Bei der Herstellung von Batterien werden häufig Anode und/oder Kathode beschichtet, um in der betreffenden Batterie ein aktives, d.h. energiespeicherndes Material (z.B. Lithium-Metalloxide) einbringen zu können. Ähnliches lässt sich z.B. für Bipolarplatten einer Brennstoffzelle feststellen, welche ebenfalls beschichtet werden, um diese vor einer Oxidation und/oder Korrosion schützen zu können.

Um eine gewünschte Funktionalität einer derartig hergestellten Batterie und/oder Brennstoffzelle zu gewährleisten, ist eine genaue Prozessüberwachung des Beschichtungsprozesses erforderlich, um einen deterministischen und stabilen Prozessablauf sicherstellen zu können.

Bisher wurde das Problem der Prozessüberwachung und -stabilität in Beschichtungsanlagen vor allem durch manuelle Überwachung und Eingriffe in den Beschichtungsprozess gelöst. Die Prozessparameter werden von einem Benutzer und/oder Techniker einer industriellen Beschichtungsanlage regelmäßig überwacht und bei Abweichungen durch manuelle Korrekturen behoben. Die Grundlage dafür ist die Erfahrung und das Expertenwissen der Benutzer und Techniker.

Dies ist jedoch häufig zeitaufwändig und kann menschliches Versagen beinhalten, wodurch ein möglicherweise während des Beschichtungsprozesses auftretendes Fehlverhalten zu spät oder gar nicht entdeckt wird. Ferner sind meist nur sehr erfahrene Maschinenbediener in der Lage die Zusammenhänge der verschiedenen Anlagen-, Prozess- und Materialparameter in der erforderlichen Tiefe zu begreifen, ein Fehlverhalten zu erkennen und adäquate Gegenmaßahmen zu ergreifen, um dem Fehlverhalten entsprechend entgegenzuwirken.

Ferner können häufig, auf Grund der Komplexität eines Beschichtungsprozesses, damit assoziierte Prozessparameter nicht isoliert voneinander betrachtet werden, sondern erfordern häufig eine Analyse in deren Gesamtheit, da die jeweiligen Prozessparameter wechselseitig voneinander abhängig sein können. Die Interpretation einer derartigen Abhängigkeit erfordert im Speziellen erfahrene Mitarbeiter und ist als komplex und zeitaufwendig anzusehen.

Dies bedeutet auch, dass ein Abgleich jeden Prozessparameters mit vorgegebenen Sollwerten meist nicht ausreichend ist, da gerade die Zusammenhänge aller Parameter eine stabile bzw. instabile Beschichtung ergeben.

Einige Beschichtungsanlagen verfügen über rudimentäre Steuerungssysteme, die eine automatische Regelung einiger Prozessparameter ermöglichen. Diese Regelung basiert jedoch häufig auf festen Schwellenwerten und kann nicht die gesamte Bandbreite der Prozessoptimierung abdecken, da sie in deren Funktionalität meist (stark) limitiert ist.

Das Intervall innerhalb dessen sich ein Prozessparameter bewegen kann, um noch für den Beschichtungsprozess als akzeptabel angesehen zu werden, wird als Prozessfenster, wobei das Prozessfenster durch einen Soll-Parameterbereich beschrieben werden kann, bezeichnet. Diese werden meist nur in seltenen Fällen von geschulten Prozessingenieuren während der Prozessentwicklung berechnet und stützen sich alternativ häufig auf Schätzungen oder grobe Erfahrungswerte. Eine automatisierte Neuberechnung bei während des Beschichtungsprozesses geänderten (Umwelt-)Bedingungen findet während der Produktion meist nicht statt.

Auch verwenden derzeit zur Überwachung verwendete Verfahren nicht in allen Fällen Echtzeitdaten, so dass ein Erkennen einer möglicherweise als unzureichend anzusehenden Beschichtung meist nur zeitverzögert erfolgen kann und ein nicht-optimal verlaufender Beschichtungsprozess zunächst weiterläuft, was mit einer reduzierten Qualität auf das Endprodukt einhergehen kann.

Es besteht daher ein Bedarf eine Weiterentwicklung einer Überwachung eines Beschichtungsprozesses bereitzustellen, wobei die zuvorgenannten Nachteile zumindest teilweise überwunden werden.

Die vorliegende Erfindung stellt sich daher die objektive technische Aufgabe eine effizientere und verbesserte Steuerung eines Beschichtungsprozesses bereitzustellen.

Gemäß einem ersten Aspekt wird ein computer-implementiertes Verfahren zum Bestimmen optimierter Betriebsparameter für einen Beschichtungsprozess vorgeschlagen. Das computer-implementierte Verfahren kann ein Erfassen zumindest eines mit dem Beschichtungsprozess assoziierten Parameters sowie ein Bestimmen eines mit einer Beschichtung, welche durch den Beschichtungsprozess hergestellt wird, assoziierten Soll-Parameterbereichs umfassen, wobei das Bestimmen auf einem analytischen Modell und/oder einem dreidimensionalen computational fluid dynamics, CFD, Modell basiert. Ferner kann das computer-implementierte Verfahren ein Bestimmen eines Betriebsparameters für den Beschichtungsprozess zumindest teilweise basierend auf dem erfassten Parameter und dem Soll-Parameterbereich umfassen.

Unter einem optimierten Betriebsparameter kann ein Parameter verstanden werden, welcher als ein Einstellungsparameter einer für den Beschichtungsprozess verwendeten Vorrichtung verwendet werden kann und sich dadurch auszeichnet, dass der optimierte Betriebsparameter als der Betriebsparameter verstanden werden kann, welcher zu einem als ideal anzusehenden zumindest einen Prozessparameter führt, wenn die für die Beschichtung verwendete Vorrichtung mit dem optimierten Betriebsparameter oder den optimalen Betriebsparametern betrieben wird.

Unter einem Soll-Parameterbereich kann vorliegend ein Bereich verstanden werden, innerhalb dessen ein konkret ausgeprägter Wert des Prozessparameters anwendungsgemäß fluktuieren bzw. liegen darf, um noch einen Beschichtungsprozess gemäß Spezifikation ausführen zu können.

Unter einem CFD-Modell kann ein computergestütztes Verfahren zur Berechnung und Analyse von Strömungen, Wärmeübertragung, Beschichtungsprozessen, etc. sowie damit verbundenen Phänomenen, die auf der Lösung grundlegender physikalischer bzw. hydrodynamischen Erhaltungsgleichungen basieren, verstanden werden. Es kann eine Diskretisierung eines Rechengebiets umfassen, wobei das zu untersuchende Volumen in eine Vielzahl kleiner Gitterzellen unterteilt werden kann, die an die Geometrie und Struktur des zu analysierenden Systems angepasst werden können. Das zugrundeliegende Modell kann nichtlineare partielle Differentialgleichungen für Masse-, Impuls- und Energieerhaltung in jeder Gitterzelle lösen und kann die Berechnung relevanter physikalischer Größen wie Druck, Temperatur, Dichte und Strömungsgeschwindigkeit als Funktion von Ort und Zeit ermöglichen. Dabei können spezifische Randbedingungen wie Geometrie, Materialeigenschaften und externe Einflüsse in die Berechnungen integriert werden. Die berechneten Daten können als dreidimensionale Felder dargestellt werden, um die dynamische Entwicklung des simulierten Systems umfassend beschreiben zu können. Dieses CFD-Modell kann eine detaillierte und realitätsnahe Simulation komplexer Strömungsvorgänge ermöglichen und kann zur Optimierung von Designs, Prozessen oder Systemen in verschiedenen technischen Anwendungsbereichen eingesetzt werden.

In einigen Fällen kann zumindest ein weiteres Modell für die Bestimmung des Soll-Parameterbereichs hinzugefügt werden, welches z.B. auch einen Fehlereffekt eines Beschichtungsprozesses berücksichtigen kann, welcher derzeit noch nicht bekannt ist.

Das Bestimmen des Soll-Parameterbereichs kann eine Korrelation verschiedener Betriebsparameter und/oder Prozessparameter (und relativ zueinander) berücksichtigen.

Durch die Überwachung durch das Erfassen eines Prozessparameters, dem Bestimmen eines Betriebsparameters kann eine ständige Verbesserung des Beschichtungsprozesses über einen Zeitverlauf hinweg ermöglicht werden. Die Prozessüberwachung und -steuerung in Beschichtungsanlagen kann somit verbessert werden, indem eine fortschrittliche, automatisierte Lösung für eine bessere Produktionsleistung und -qualität bereitgestellt wird. Dies kann zu einer höheren Effizienz, geringeren Ausschussraten und insgesamt niedrigeren Betriebskosten führen. Dies wiederum kann zu einer höheren Produktqualität, Prozessstabilität, Effizienz und Kosteneffizienz des Beschichtungsprozesses beitragen. Insbesondere kann die Definition eines Soll-Parameterbereich die Definition eines stabilen Arbeitsbereichs ermöglichen, so dass ein stabiler Ablauf des Beschichtungsprozesses ermöglicht werden kann und z.B. unerwünschte Randüberhöhungen vermieden werden können. Ferner ermöglicht das Bestimmen des Soll-Parameterbereichs eine bessere Anpassung des Beschichtungsprozesses an tatsächlich vorhandene Gegebenheiten, da diese nicht alleinig auf (einmaligen) Vorberechnungen basieren.

Gemäß einer Ausführungsform kann das Erfassen ein Erfassen eines Echtzeit-Prozessparameters, eines statischen Parameters, welcher mit einer Beschichtungsanlage, welche den Beschichtungsprozess ausführt, assoziiert ist, und/oder einen für die Beschichtung verwendeten Materialparameter umfassen.

Unter einem Echtzeit-Prozessparameter kann ein Prozessparameter verstanden werden, welcher zur Laufzeit eines Beschichtungsprozesses erfasst wird. Der Echtzeit-Prozessparameter kann direkt durch Sensoren erfasst werden und wird nicht aus einer Datenbank mit voraberfassten Prozessparametern entnommen. Die Echtzeit-Prozessdaten können kontinuierlich erfassten werden (d.h. mit einer vorgegebenen Abtastrate von z.B. 0,5 Hz -10 Hz, 11 Hz -100 Hz, 101 Hz -1 kHz, 1 kHz - 10 kHz oder einer höheren Abtastrate).

Der statische Parameter kann z.B. als ein Parameter bereitgestellt werden, welcher mit einer für den Beschichtungsprozess verwendeten Vorrichtung assoziiert ist. Ein mit der für den Beschichtungsprozess verwendeten Vorrichtung assoziierter Parameter kann, z.B. ein Parameter sein, welcher mit einer Düsengeometrie (z.B. eine Öffnungsweite, eine Düsenlänge, eine Düsenform, ein eine Kavität beschreibender Parameter, Position der Düse, Spaltabstand, die der Düse zugeführte Materialmenge, etc.) der Vorrichtung assoziiert sein kann, wobei die Düse derart konfiguriert sein kann, dass aus dieser das Beschichtungsmaterial während des Beschichtungsvorgangs austritt. Zusätzlich oder alternativ kann der statische Parameter auch einen minimalen Spaltabstand angeben. In einigen Fällen kann der Spaltabstand auch nichtstatisch sein, sondern z.B. dynamisch z.B. mit Hilfe eines Schraubensystems positioniert werden (z.B. durch entsprechend vorgesehener flexibler Lippen). In einigen Fällen kann der statische Parameter auch eine Form und/oder Geometrie der Düsenlippe beschreiben.

Unter einem Materialparameter kann z.B. eine Viskosität des für den Beschichtungsprozess verwendeten Beschichtungsmaterials verstanden werden. Zusätzlich oder alternativ kann der Materialparameter auch eine Oberflächenspannung, eine Dichte und/oder einen Feststoffgehalt des für die Beschichtung verwendeten Materials angeben. Diese Parameter können in einigen Fällen in Echtzeit erfasst werden (z.B. durch in der für die Beschichtung verwendeten Vorrichtung enthaltenen Sensoren). Zusätzlich oder alternativ kann es auch möglich sein, dass Materialproben des verwendeten Materials in einem Labor getestet werden. Die betreffenden Parameter können dann über eine Verbindung eines Labordatenmanagementsystem zur Verfügung gestellt und damit schließlich erfasst werden oder ein Labormitarbeiter kann die jeweiligen Materialparameter (manuell) in einer separaten Eingabemaske eingeben, so dass der Materialparameter letztendlich dadurch erfasst werden kann.

In einigen Fällen kann das Material z.B. für die Beschichtung einer Batterieanode Lithium (Lithiummetall oder Lithiumverbindungen wie Lithiumtitanat), Graphit (Graphit wird häufig als Anodenmaterial in Lithium-Ionen-Batterien verwendet) und/oder Silizium (Silizium kann in einigen fortschrittlichen Batterien als Anodenmaterial eingesetzt werden, da es eine höhere Kapazität bietet als Graphit) umfassen.

In einigen Fällen kann das Material z.B. für die Beschichtung einer Batteriekathode Lithiumeisenphosphat (wird häufig als Kathodenmaterial in Lithium-Ionen-Batterien verwendet) und/oder Lithiumnickelcobaltoxid, Lithiummanganoxid oder Lithiumnickelmanganoxid (werden ebenfalls in Lithium-Ionen-Batterien verwendet und bieten eine höhere Energiedichte als Lithiumeisenphosphat) umfassen.

Auf diese Weise kann eine effiziente Reaktion, z.B. durch Bereitstellen des Betriebsparameters, auf einen aktuell vorherrschenden Ist-Parameter erfolgen und damit insgesamt ein kontinuierlich verbesserter Beschichtungsprozess ermöglicht werden. Insbesondere kann die Verwendung von Echtzeitprozessparametern ein kontinuierliches Erkennen einer Abweichung eines Prozessparameters von einem Idealzustand unmittelbar und zeitnah ermöglichen und somit verbesserte und unmittelbare Gegenmaßnahmen ergriffen werden, anstatt sich auf regelmäßig und/oder unregelmäßige Inspektionen verlassen zu müssen.

Gemäß einer weiteren Ausführungsform kann der Soll-Parameterbereich eine maximal tolerierbare Dickenschwankung der Beschichtung angeben.

Unter einer Dickenschwankung kann vorliegend die Standardabweichung der Dicke der Beschichtung über ein zu beschichtendes Teil bzw. Substrat hinweg (z.B. entlang einer Längs- und/oder Breitenrichtung) verstanden werden.

Unter maximal tolerierbar kann diejenige Dickenschwankung verstanden werden, welche gerade noch eine erforderliche und/oder gewünschte Funktion der Beschichtung ermöglicht.

Durch Limitieren des Soll-Parameterbereichs auf eine maximal tolerierbare Dickenschwankung kann eine Dickenverteilung der Beschichtung über das zu beschichtende Teil in effizienter Weise derart definiert werden, dass die Beschichtung deren Sollfunktion (z.B. Bereitstellen von Energieträgern in einer Batterie) vollumfänglich erfüllen kann.

Gemäß einer weiteren Ausführungsform kann das analytische Modell eine den Beschichtungsprozess beschreibende physikalische Gesetzmäßigkeit umfassen und bevorzugt zumindest einen während des Beschichtungsvorgang auftretbaren Defekt beschreiben, bevorzugt eine Wellenbildung in der Beschichtung, einen Lufteinschluss in der Beschichtung und/oder eine Streifenbildung in der Beschichtung.

Unter einem analytischen Modell kann eine physikalische Gleichung verstanden werden, welche den Beschichtungsprozess zumindest teilweise auf Naturgesetze gestützt beschreiben kann. Die physikalische Gleichung kann als eindimensionale Gleichung gegeben sein.

Unter einer Wellenbildung in der Beschichtung kann das zumindest lokale Ausbilden von gekrümmten Erhebungen im Beschichtungsmaterial verstanden werden. Dies kann z.B. durch eine zu geringe Beschichtungsdicke, einen zu hohen Düsenabstand oder eine zu hohe Geschwindigkeit hervorgerufen werden.

Unter einem Lufteinschluss kann der Einschluss von Luft(bläschen) im Beschichtungsmaterial verstanden werden. Der Lufteinschluss kann bereits im noch nicht auf das Substrat aufgetragenem Material vorhanden sein und/oder im Laufe des Beschichtungsprozesses in unerwünschter Weise erfolgen.

Unter einer Streifenbildung kann vorliegend das Ausbilden von streifenförmig verlaufenden Dichteschwankungen im Beschichtungsmaterial verstanden werden.

Auf diese Weise können in das analytische Modell die am häufigsten auftretenden Fehlerquellen berücksichtigt und deren Auswirkungen auf den Soll-Parameter berücksichtigt werden. Auf dieser Weise kann in effizienter Weise ein Wertebereich für den Soll-Prozessparameter bestimmt werden, innerhalb welchem sich ein Soll-Parameterwert bewegen kann, ohne negative Auswirkungen auf den Beschichtungsprozess als solchen zu verursachen.

Gemäß einer weiteren Ausführungsform kann das analytische Modell als Eingangsparameter zumindest eine Bahngeschwindigkeit, einen Beschichtungsspalt, eine Nassfilmdicke, eine Lippenlänge, eine Oberflächenspannung eines Beschichtungsmaterials, eine Dichte des Beschichtungsmaterials und/oder eine Viskosität des Beschichtungsmaterials in Abhängigkeit von einer Scherrate einbeziehen.

Unter einer Scherrate kann ein Maß verstanden werden, welches indikativ für eine Geschwindigkeit der Verformung eines Fluids unter Einwirkung einer Scherkraft sein kann. Sie kann die Änderung der Geschwindigkeit senkrecht zur Strömungsrichtung angegeben. Mathematisch kann sich die Scherrate als der Gradient der Strömungsgeschwindigkeit quer zur Hauptströmungsrichtung ausdrücken lassen. In einem CFD-Modell kann die Scherrate eine Größe zur Charakterisierung des Fließverhaltens von Fluiden repräsentieren, insbesondere bei nicht-newtonschen Flüssigkeiten, deren Viskosität von der Scherrate abhängt. Die Scherrate kann Rückschlüsse auf lokale Strömungsbedingungen, Turbulenzen und potenzielle Materialbelastungen in strömungstechnischen Anwendungen ermöglichen.

Dies kann ein zielgerichteteres Adaptieren des Soll-Parameterbereichs in Abhängigkeit von tatsächlichen Anlagen- und/oder Materialparametern ermöglichen. Somit kann in effizienter Weise ein realistischer und an tatsächlich vorhandene Begebenheiten angepasster Soll-Parameterbereich bereitgestellt werden.

Gemäß einer weiteren Ausführungsform kann das Bestimmen des Soll-Parameterbereichs auf einem von dem dreidimensionalen CFD-Modell abgeleiteten Modell basieren und ein Dickenprofil der Beschichtung berücksichtigen.

Basierend auf dem CFD-Modell kann eine Berücksichtigung dreidimensionaler Beschichtungsdefekte in einer Beschichtung erfolgen. Durch Einbeziehen eines Dickenprofils im CFD-Modell kann das CFD-Modell zielgerichteter und akkurater an eine tatsächliche Beschichtung angepasst werden und damit ein genaueres Abbild der Realität ermöglichen. Auf diese Wiese kann ein verbessertes und realitätsnäheres Bestimmen des Soll-Parameterbereichs ermöglicht werden.

Gemäß einer weiteren Ausführungsform kann das Bestimmen des Soll-Parameterbereichs zumindest teilweise auf einer Betrachtung von physikalischen und/oder prozesstechnischen Grenzen basieren, bevorzugt bedingt durch ein air entrainment, einen minimalen Beschichtungsspalt, ein low flow limit und/oder eine maximale Nassfilmdicke.

Unter physikalischen Grenzen können Grenzen verstanden werden, welche z.B. durch Materialeigenschaften des Beschichtungsmaterials bedingt sind, wie z.B. eine maximale oder minimale Viskosität, eine maximale oder minimale Dichte des Beschichtungsmaterials (z.B. bei verschiedenen Temperaturen). Unter prozesstechnischen Grenzen können vorliegend Grenzen verstanden werden, welche durch den Beschichtungsprozess als solchen hervorgerufen werden können, wie z.B. Grenzen, welche z.B. aus Limitierungen der für die Beschichtung verwendeten Vorrichtung hervorgerufen werden (z.B. bedingt durch einen maximalen Materialdurchsatz, maximale und/der minimale Prozesstemperaturen, minimaler Düsenabstand etc.).

Unter einem *"airentrainment"* können vorliegend Werte im Soll-Parameterbereich verstanden werden, bei denen und/oder ab denen eine eintretende Instabilität der dynamischen Kontaktlinie zwischen Beschichtungsmaterial und Substrat, auf welches das Beschichtungsmaterial aufgetragen wird, zu einem Lufteintrag in dem Beschichtungsfilm führen kann.

Charakteristisch für "*air entrainment*" können dabei regelmäßig über die gesamte Beschichtungsbreite auftretende Löcher in der Beschichtungsschicht sowie Längsstreifen in der Beschichtungsschicht verstanden werden. Der Effekt des *"air entrainmanet*" kann z.B. dann auftreten, wenn eine zu geringe Nassfilmdicke, ein zu hoher Düsenabstand, eine zu hohe Geschwindigkeit (z.B. wenn eine Geschwindigkeit mit welcher das Substrat bewegt wird mehr als 100 m/min beträgt, wobei ein typischer Geschwindigkeitsbereich zwischen 40 m/min - 100 m/min liegen kann) und/oder unvorteilhafte Eigenschaften des Beschichtungsmaterials vorliegen.

Unter dem *"minimalen Beschichtungsspalt*" kann der Mindestabstand zwischen einer Schlitzdüse und einer Beschichtungswalze (einer für die Beschichtung verwendeten Vorrichtung) verstanden werden, der für einen sicheren Betrieb der Beschichtungsanlage nicht unterschritten werden darf. Dieser kann von der Anlage bestehend aus Schlitzdüse, Positioniersystem und Beschichtungswalze fest vorgegeben werden.

Unter dem "*low flow limit*" kann die Instabilität eines filmgebenden Meniskus verstanden werden. Ist der filmgebende Meniskus zu stark gekrümmt, kann dieser keine stabile Brücke zwischen Lippe und Beschichtung mehr bilden. Unter dem filmgebenden Meniskus kann eine konkave oder konvexe Krümmung verstanden werden, die an der Grenzfläche zwischen der Düse und dem Beschichtungsmaterial in Beschichtungsrichtung entsteht. Die genaue Ausgestaltung des filmgebenden Meniskus kann von verschiedenen Faktoren abhängen, wie z.B. der Viskosität der Flüssigkeit, der Oberflächenspannung, der Düsenkonstruktion und den Prozessparametern. Es kann von besonderer Bedeutung sein, den Meniskus während des Beschichtungsprozesses zu überwachen und zu kontrollieren, um eine gleichmäßige und präzise Beschichtung zu gewährleisten.

Mögliche Nassfilmdicken können nach oben durch einen Spaltabstand (z.B. zwischen einer Auslassdüse der für die Beschichtung verwendeten Vorrichtung und dem Substrat auf welchem die Beschichtung aufgetragen werden soll) limitiert sein. Höhere Nassfilmdicken können zu einem Herauslaufen der Beschichtungsmasse entgegen der Beschichtungsrichtung aus dem Beschichtungsspalt führen. Charakteristisch treten bei Überschreitung des Limits sehr hohe Randüberhöhungen und Schwankungen der Beschichtungsbreite auf.

Charakteristisch für das "*low flow limit*" können z.B. regelmäßig über die gesamte Beschichtungsbreite verteilte Längsstreifen verstanden werden.

Für das *"low flow limit*" relevante Einflussfaktoren können z.B. eine zu geringe Nassfilmdicke, ein zu hoher Düsenabstand (beschreibend den Abstand zwischen einem Düsenauslass und dem Substrat, welches beschichtet werden soll), eine zu hohe Geschwindigkeit (d.h. einer Geschwindigkeit, mit welcher das Substrat bewegt wird) und/oder Eigenschaften des Beschichtungsmaterials sein.

Dies kann eine weitere zielgerichtete Anpassung des Soll-Parameterbereichs an tatsächliche Gegebenheiten ermöglichen und damit der Beschichtungsprozess als solcher weiter optimiert und verbessert werden.

Gemäß einer weiteren Ausführungsform kann das computer-implementierte Verfahren ferner ein Erfassen eines gegenwärtig im Einsatz befindlichen Betriebsparameters für den Beschichtungsprozess sowie ein Vergleichen des gegenwärtigen im Einsatz befindlichen Betriebsparameters mit dem bestimmten Betriebsparameters umfassen. Ferner kann das computer-implementierte Verfahren ein Bestimmen, zumindest teilweise basierend auf dem Vergleichen, dass der gegenwärtig im Einsatz befindliche Betriebsparameter nicht dem bestimmten Betriebsparameter entspricht, umfassen.

Ein gegenwärtig im Einsatz befindlicher Betriebsparameter kann z.B. kontinuierlich oder in (vordefinierten) bevorzugt festen Zeitabständen erfasster Betriebsparameter sein. Der gegenwärtig im Einsatz befindliche Betriebsparameter kann direkt von einer für den Beschichtungsprozess verwendeten Vorrichtung ausgelesen werden. Zusätzlich oder alternativ kann der gegenwärtig im Einsatz befindliche Betriebsparameter aus einer Datenbank (auf welche z.B. über ein Intranet und/oder ein Internet zugegriffen werden kann) ausgelesen werden.

Das Bestimmen, dass der gegenwärtig im Einsatz befindliche Betriebsparameter nicht mit dem bestimmten Betriebsparameter übereinstimmt, kann z.B. bedeuten, dass der gegenwärtig im Einsatz befindliche Betriebsparameter kleiner oder größer ist als der bestimmte Betriebsparameter. Alternativ kann das Bestimmen auch ein Bestimmen umfassen, dass ein derzeit im Einsatz befindlicher Betriebsparameter bzgl. dessen Bool'schen Wertes nicht mit dem bestimmten Betriebsparameter übereinstimmt.

Dies kann ein effizientes Bestimmen ermöglichen, ob eine gegenwärtige Abweichung eines bestimmten Betriebsparameters (und damit einen als optimiert anzusehenden Betriebsparameter) von einem derzeit im Einsatz befindlichen Betriebsparameter vorliegt.

Gemäß einer weiteren Ausführungsform kann das computer-implementierte Verfahren ein Bereitstellen eines Hinweises, welcher indikativ dafür ist, dass der gegenwärtig im Einsatz befindliche Betriebsparameter keinen optimierten Betriebsparameter darstellt und/oder ein Bereitstellen einer Empfehlung, dass der bestimmte Betriebsparameter zu einem im Vergleich zum gegenwärtig verwendeten Betriebsparameter zu einem verbesserten Prozessparameter führt und/oder ein Einstellen der Beschichtungsanlage auf den bestimmten Betriebsparameter umfassen.

Der Hinweis kann einem Benutzer der für die Beschichtung verwendeten Vorrichtung über eine Mensch-Computer-Schnittstelle (engl.: *human-machine-interface* (HMI)) bereitgestellt werden. Die Mensch-Computer-Schnittstelle kann z.B. ein Anzeigemittel (wie z.B. ein Display, eine App, eine Push-Mitteilung, etc.), ein akustisches Ausgabemittel (z.B. ein Lautsprecher (wobei der Hinweis als Alarm und/oder gesprochener Inhalt bereitgestellt werden kann)) und/oder ein visuelles Anzeigemittel (z.B. eine Warnlampe) sein.

Das Bereitstellen der Empfehlung kann mittels der Mensch-Computer-Schnittstelle erfolgen. Basierend auf der Empfehlung kann der Benutzer der für die Beschichtung verwendeten Vorrichtung bestätigen, dass der bestimmte Betriebsparameter zum Einsatz kommen soll und die für die Beschichtung verwendete Vorrichtung auf den bestimmten Betriebsparameter eingestellt werden soll. In einigen Fällen kann der Benutzer der für die Beschichtung verwendeten Vorrichtung die Empfehlung auch ablehnen, so dass die für die Beschichtung verwendete Vorrichtung entsprechend nicht auf den bestimmten Betriebsparameter eingestellt wird.

Auf diese Weise kann eine unmittelbare Benachrichtigung eines Benutzers, der für die Beschichtung verwendeten Vorrichtung, ermöglicht werden. Dies kann einen schnellen Eingriff in den Beschichtungsprozess unterstützen, so dass die Zeitspanne, während welcher der Beschichtungsprozess auf einem nicht als optimal anzusehenden Arbeitspunkt läuft, minimiert werden. Somit kann die Beschichtungsqualität, welche aus dem Beschichtungsprozess resultiert, verbessert werden. Insbesondere kann das unmittelbare Einstellen den Bedarf an menschlichem Eingreifen reduzieren und so automatische Anpassung ermöglichen, um die Stabilität und Qualität des Beschichtungsprozesses sicherzustellen.

Gemäß einer weitere Ausführungsform kann die Beschichtung zum Beschichten einer Anode und/oder einer Kathode einer Batterie verwendet werden.

Zusätzlich oder alternativ kann die Beschichtung auch bei der Herstellung von Brennstoffzellen verwendet werden, wie z.B. bei der Beschichtung von Elektroden, Membranen und/oder Bipolarplatten.

In einigen Fällen kann die Beschichtung auch für die Beschichtung anderer Teile benutzt werden.

Dies kann eine optimierte und verbesserte Herstellung von Batterien und/oder Brennstoffzellen unterstützen.

Gemäß einer weiteren Ausführungsform kann eine Dicke der Beschichtung 150-200 µm betragen und eine Fluktuation der Dicke über eine Breite der Beschichtung hinweg kleiner als 2 µm sein.

In einigen Fällen kann eine Breite der Beschichtung 100 mm-2000 mm betragen.

Somit kann eine optimierte Funktionalität der Beschichtung (z.B. für Anwendungen bei der Herstellung von Batterien) sichergestellt werden.

Gemäß einem zweiten Aspekt wird ein Computerprogrammprodukt vorgeschlagen. Das Computerprogrammprodukt umfasst Befehle, die bei der Ausführung des Computerprorammprodukts durch einen Computer diesen veranlassen, das Verfahren wie hierin beschrieben auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. In einigen Fällen kann das Computerprogrammprodukt auch als Anwendung im Sinne einer App (z.B. zum Ausführen auf einem Mobilgerät (z.B. ein Tablet, ein Mobiltelefon, etc.) verstanden werden.

Gemäß einem dritten Aspekt wird eine computer-implementierte Vorrichtung zum Bestimmen optimierter Betriebsparameter für einen Beschichtungsprozess vorgeschlagen. Die computer-implementierte Vorrichtung kann eine Erfassungseinheit zum Erfassen zumindest eines mit dem Beschichtungsprozess assoziierten Parameters sowie eine erste Bestimmungseinheit zum Bestimmen eines mit einer Beschichtung, welche durch den Beschichtungsprozess hergestellt wurde, assoziierten Soll-Parameterbereichs umfassen, wobei das Bestimmen auf einem analytischen Modell und/oder einem dreidimensionalen computational fluid dynamics, CFD, Modell basiert. Ferner kann die computer-implementierte Vorrichtung eine zweite Bestimmungseinheit zum Bestimmen eines Betriebsparameters für den Beschichtungsprozess zumindest teilweise basierend auf dem erfassten Parameter und dem Soll-Parameterbereich umfassen.

Die jeweilige Einheit, zum Beispiel die Erfassungseinheit, die erste Bestimmungseinheit und/oder die zweite Bestimmungseinheit kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausführungsform kann die computer-implementierte Vorrichtung eine Ausführungseinheit zum Ausführen des computer-implementierten Verfahrens wie hierin beschrieben und/oder eine Ausführungseinheit zum Ausführen des Computerprogrammprodukts wie hierin beschrieben umfassen.

Gemäß einem vierten Aspekt wird ein System zum Bestimmen optimierter Betriebsparameter für einen Beschichtungsprozess vorgeschlagen. Das System kann die computer-implementierte Vorrichtung wie hierin beschrieben und das Computerprogrammprodukt wie hierin beschrieben umfassen.

Neben der automatisierten Echtzeit-Prozessüberwachung und -optimierung können Aspekte der Erfindung auch in der Phase der Prozess- und Materialauslegung, vor Beginn des eigentlichen Beschichtungsvorgangs verwendet werden. In der Planungsphase der für den Beschichtungsprozess verwendeten Vorrichtung und des Beschichtungsprozesses selbst kann ein Prozessingenieur basierend auf den Berechnungen des Soll-Parameterbereichs die Prozess-, Vorrichtungs- und Materialparameter bereits so definieren, dass diese für eine stabile Beschichtung optimiert sind. Werden die Parameter bereits im Vorfeld in einem bestimmten Verhältnis zueinander definiert kann dies z.B. das stabile Beschichtungsfenster, ausgedrückt durch den Soll-Parameterbereich, erhöht und vereinfacht werden und so die spätere Optimierung des Prozesses verbessert werden. Aspekte der Erfindung können auch die Modellierung eines digitalen Prozesszwillings ermöglichen, der es ermöglicht, den Beschichtungsvorgang auch ohne reale Vorrichtung zu simulieren und optimale Parameter zu identifizieren. Dies kann zu kürzeren Anlaufphasen im späteren Betrieb führen.

Die für die vorgeschlagene Vorrichtung beschriebenen Ausführungsformen und Merkmale gelten für das vorgeschlagene Verfahren entsprechend. Umgekehrt gelten die für das Verfahren vorgeschlagenen Ausführungsformen für die vorgeschlagene Vorrichtung entsprechend.

Ferner sei angemerkt, dass, auch wenn verschiedene Ausführungsformen hierin isoliert beschrieben werden, so können diese dennoch miteinander kombiniert werden.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung.

Im Weiteren wird die Erfindung anhand von bevorzugten Ausführungsformen unter Bezugnahme auf die beigelegten Figuren näher erläutert.
Fig. 1 zeigt eine exemplarische Implementierung eines Verfahrens;
Fig. 2 zeigt einen exemplarischen Querschnitt;
Fig. 3 zeigt ein computer-implementiertes Verfahren;
Fig. 4 zeigt eine computer-implementierte Vorrichtung; und
Fig. 5 zeigt ein System.

In den Figuren sind gleiche oder funktionsgleiche Elemente mit denselben Bezugszeichen versehen worden, sofern nichts anderes angegeben ist.

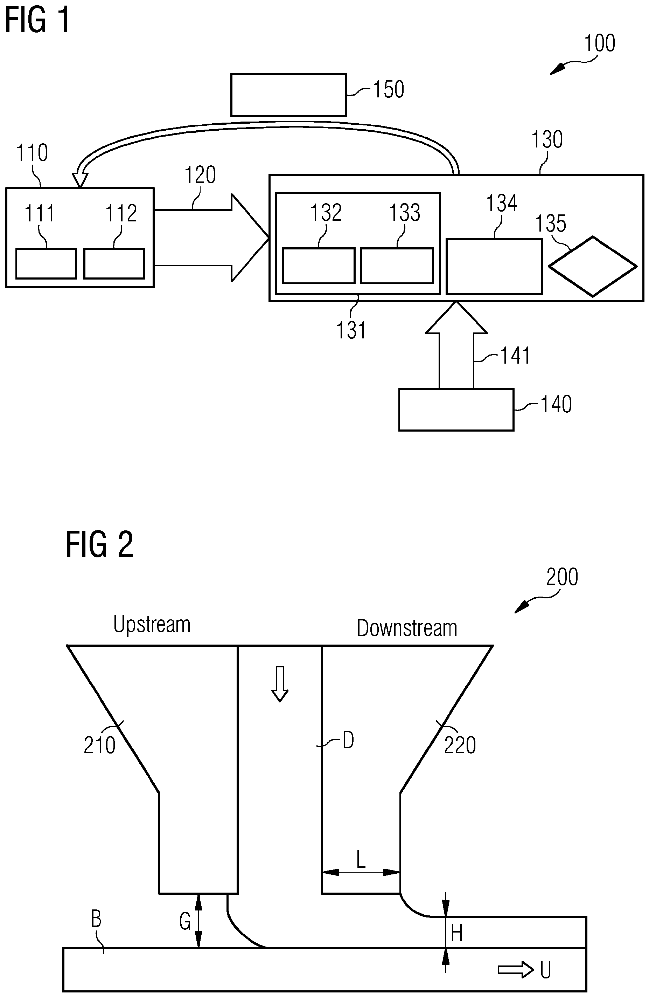

Fig. 1 zeigt eine exemplarische Implementierung eines Verfahrens 100 zum Bestimmen optimierter Betriebsparameter für einen Beschichtungsprozess.

Eine zur Beschichtung verwendete Vorrichtung 110 (hierin auch Anlage) kann eine Steuerung 111 sowie eine Mensch-Computer-Schnittstelle 112 umfassen. Die Steuerung 111 kann dazu eingerichtet sein, einen bestimmten Betriebsparameter entgegenzunehmen und basierend darauf, die zur Beschichtung verwendete Vorrichtung 110 dazu zu veranlassen, basierend auf dem bestimmten Betriebsparameter einen Beschichtungsprozess auszuführen.

Steuerung 111 kann ferner konfiguriert sein, einen derzeit in Verwendung befindlichen Betriebsparameter zu erfassen (z.B. zumindest teilweise basierend auf einer entsprechenden Sensorik als Teil der für den Beschichtungsprozess verwendeten Vorrichtung). In einigen Fällen kann die Steuerung 111 ferner dazu konfiguriert sein, einen Prozessparameter zu erfassen.

Die Mensch-Computer-Schnittstelle 112 kann bereitgestellt werden wie hierin beschrieben.

Anlage 110 kann mit einem Kommunikationsmittel bereitgestellt sein. Das Kommunikationsmittel kann es ermöglichen, einen Anlagen- bzw. Prozessparameter 120 an eine Optimierungsanwendung 130 bereitzustellen. Der Anlagen bzw. Prozessparameter 120 kann z.B. den aktuell in Verwendung befindlichen Betriebsparameter umfassen und/oder einen Anlagenparameter und/der einen Prozessparameter (wie z.B. eine gemessene aktuelle Dicke einer Beschichtungsschicht). Ein Anlagenparameter kann ein Einstellungsparameter der für die Beschichtung verwendeten Vorrichtung sein und/oder ein Parameter, welcher mit einem für den Beschichtungsprozess relevanten Bauteils der für die Beschichtung verwendeten Vorrichtung (wie z.B. ein Durchmesser einer Auslassdüsenöffnung, aus welcher das für die Beschichtung verwendete Beschichtungsmaterial austreten kann) sein.

Optimierungsanwendung 130 kann eine erste Bestimmungseinheit 131 umfassen, welche dazu konfiguriert ist, einen Soll-Parameterbereich für die durch den Beschichtungsprozess auf einem Substrat aufgetragene Beschichtung zu bestimmen. Die erste Bestimmungseinheit 131 kann ein analytisches Modell 132 und/oder ein CFD-Modell 133 umfassen.

Die Optimierungsanwendung 130 kann ferner eine Einheit 134 zum Bestimmen eines derzeit in Verwendung befindlichen Betriebsparameters umfassen (z.B. zumindest teilweise basierend auf dem Anlagen- und Prozessparameter 120).

Die Optimierungsanwendung 130 kann ferner Informationen 140 über das für die Beschichtung verwendete Material umfassen. Die Informationen 140 können als Parameter 141 an die Optimierungsanwendung 130 bereitgestellt werden.

Die Optimierungsanwendung 130 kann dazu konfiguriert sein einen Betriebsparameter, welcher als optimierter Betriebsparameter angesehen werden kann, zu bestimmen basierend auf dem Anlagen- und Prozessparameter 120, dem Parameter 141 und/oder dem derzeit in Verwendung befindlichen Betriebsparameters.

Optimierungsanwendung 130 kann ferner eine Überprüfungseinheit 135 umfassen. Die Überprüfungseinheit 135 kann konfiguriert sein zu überprüfen, ob der bestimmte Betriebsparameter gleich dem derzeit in Verwendung befindlichen Betriebsparameter ist.

Die Optimierungsanwendung 130 kann als eine App bereitgestellt werden. Die Optimierungsanwendung kann in einigen auf der verwendeten Vorrichtung 110 ausgeführt werden. Alternativ kann die Optimierungsanwendung 130 auch auf einer von der verwendeten Vorrichtung 110 getrennten Vorrichtung (z.B. auf einem Tablet des Benutzers) ausgeführt werden.

Die Optimierungsanwendung 130 kann "*edge computing"* verwenden. Dies kann bedeuten, dass die betreffenden Daten direkt an der für die Beschichtung verwendeten Vorrichtung verarbeitet werden können. Dies kann die Latenz deutlich reduzieren und eine schnelle Reaktion auf Prozessänderungen ermöglichen. Im Vergleich zu zentralen Systemen, bei denen Daten übertragen werden müssen, kann dies einen klaren Geschwindigkeitsvorteil bieten.

Die Verwendung von Edge-Computern in Verbindung mit offenen Schnittstellen wie einer OPC Unified Architecture (OPC-UA) kann es ermöglichen das System flexibel in Vorrichtungen, welche für Beschichtungsprozesse verwendet werden, von verschiedenen Herstellern mit verschiedenen Vorrichtungssteuerungen einzubinden. Ein aufwendiger und ggf. fehleranfälliger Eingriff in die Steuerung einer derartigen Vorrichtung ist nicht notwendig.

Wird z.B. bestimmt, dass der bestimmte Betriebsparameter nicht dem derzeit in Verwendung befindlichen Betriebsparameter entspricht, so kann basierend darauf der bestimmte Betriebsparameter als optimierter Betriebsparameter 150 an die verwendete Vorrichtung 110 kommuniziert werden, wobei die Vorrichtung 110 basierend darauf den entsprechenden Betriebsparameter auf den bestimmten Betriebsparameter einstellen kann.

Es sei ferner angemerkt, dass auch wenn hierin ein Betriebsparameter diskutiert wird, dennoch eine Vielzahl von Betriebsparametern gleichermaßen möglich ist.

Fig. 2 zeigt einen schematischen Querschnitt 200 durch eine für einen Beschichtungsprozess verwendete Vorrichtung.

Der Querschnitt 200 teilt die verwendete Vorrichtung in einen Upstream-Abschnitt 210 sowie einen Downstream-Abschnitt 220. Der Upstream-Abschnitt 210 ist dabei einem Einlass der verwendeten Vorrichtung zugewandt (d.h. der Seite der verwendeten Vorrichtung, auf welcher ein Substrat, welches einer Beschichtung unterzogen werden soll, der verwendeten Vorrichtung zugeführt wird). Der Downstream-Abschnitt 220 kann dabei als diejenige Seite der verwendeten Vorrichtung kennzeichnend verstanden werden, auf welcher ein beschichtetes Substrat die verwendete Vorrichtung verlässt.

Zwischen dem Upstream-Abschnitt 210 und dem Downstream-Abschnitt kann sich eine Auslassöffnung einer Düse D befinden.

Für den Beschichtungsprozess charakteristisch kann z.B. eine Nassfilmdicke H angesehen werden, welche eine mittlere Dicke der auf das Substrat aufgetragenen Beschichtungsschicht angibt.

Ferner kann eine verwendete Bahngeschwindigkeit U von Relevanz für den Beschichtungsprozess sein. Die verwendete Bahngeschwindigkeit U kann dabei mit der Geschwindigkeit assoziiert sein, mit welcher ein zu beschichtendes Substrat unterhalb der Düse D auf einem Band B entlangbewegt wird.

Des Weiteren kann ein Beschichtungsspalt G von Relevanz für den Beschichtungsprozess ein. Dieser kann als eine Distanz zwischen einem das Substrat transportierenden Bandes B und einer Unterseite der Düse D verstanden werden.

Es ist auch möglich, dass eine Lippenlänge L von Relevanz für den Beschichtungsprozess ist. Unter der Lippenlänge L kann die Distanz zwischen einer Innenwand der Düse D und einer auf Außenwand der Düse D entlang des Downstream-Abschnitts 220 verstanden werden. Die Lippenlänge L kann dabei diejenige Länge angeben, entlang welcher ein auf das Substrat aufgetragenes Beschichtungsmaterial ggf. noch in Kontakt mit einer Unterseite der Düse D ist.

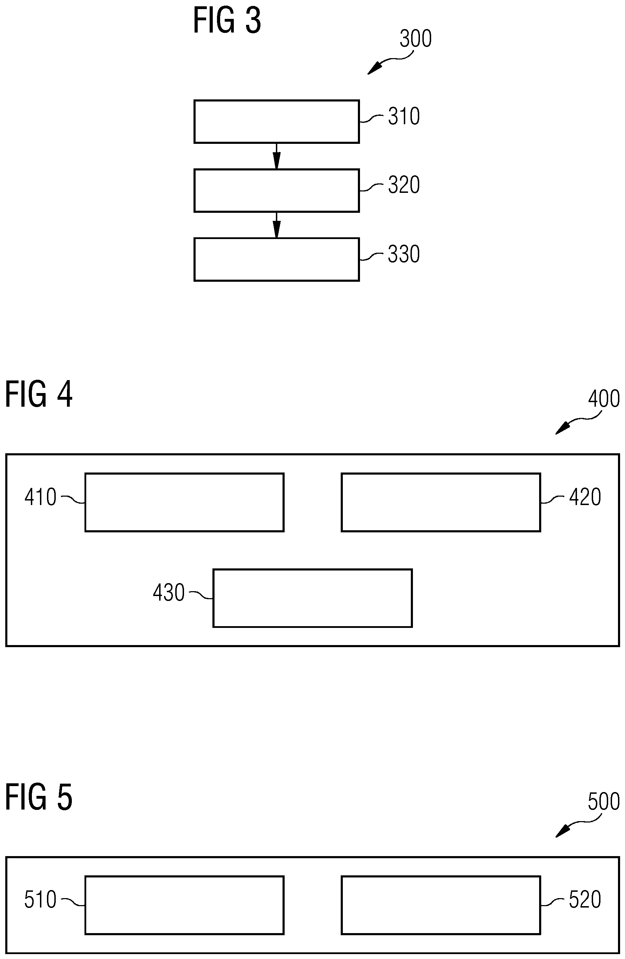

Fig. 3 zeigt ein Ablaufdiagramm eines exemplarischen Computer-implementierten Verfahrens 300 zum Bestimmen optimierter Betriebsparameter für einen Beschichtungsprozess.

In Schritt 310 erfolgt ein Erfassen zumindest eines mit dem Beschichtungsprozess assoziierten Prozessparameters.

In Schritt 320 erfolgt ein Bestimmen eines mit einer Beschichtung, welche durch den Beschichtungsprozess hergestellt wird, assoziierten Soll-Parameterbereichs, wobei das Bestimmen auf einem analytischen Modell und/oder einem dreidimensionalen computational fluid dynamics, CFD, Modell basiert.

In Schritt 330 erfolgt ein Bestimmen eines Betriebsparameters für den Beschichtungsprozess zumindest teilweise basierend auf dem erfassten Parameter und dem Soll-Parameterbereich.

Fig. 4 zeigt eine exemplarische Computer-implementierte Vorrichtung 400 zum Bestimmen optimierter Betriebsparameter für einen Beschichtungsprozess. Die Computer-implementierte Vorrichtung 400 umfasst eine Erfassungseinheit 410, eine erste Bestimmungseinheit 420 sowie eine zweite Bestimmungseinheit 430.

Die Erfassungseinheit 410 ist konfiguriert zum Erfassen zumindest eines mit dem Beschichtungsprozess assoziierten Parameters.

Die erste Bestimmungseinheit 420 ist konfiguriert zum Bestimmen eines mit einer Beschichtung, welche durch den Beschichtungsprozess hergestellt wurde, assoziierten Soll-Parameterbereichs, wobei das Bestimmen auf einem analytischen Modell und/oder einem dreidimensionalem computational fluid dynamics, CFD, Modell basiert.

Die zweite Bestimmungseinheit 430 ist konfiguriert zum Bestimmen eines Betriebsparameters für den Beschichtungsprozess zumindest teilweise basierend auf dem erfassten Parameter und dem Soll-Parameterbereich.

Fig. 5 zeigt ein exemplarisches System 500 zum Bestimmen optimierter Betriebsparameter für einen Beschichtungsprozess. Das System 500 beinhaltet eine Computer-implementierte Vorrichtung 510 und ein Computerprogrammprodukt 520.

Die Computer-implementierte Vorrichtung 510 kann konfiguriert sein, wie hierin beschrieben.

Das Computerprogrammprodukt 520 kann konfiguriert sein, wie hierin beschrieben.

Obwohl die vorliegende Erfindung anhand von Ausführungsbeispielen beschrieben wurde, ist sie vielfältig modifizierbar.

Unabhängig vom grammatikalischen Geschlecht eines bestimmten Begriffes sind Personen mit männlicher, weiblicher oder anderer Geschlechteridentität mit umfasst.

### Bezugszeichenliste

- 100: Verfahren
- 110: zur Beschichtung verwendete Vorrichtung
- 111: Steuerung
- 112: Mensch-Computer-Schnittstelle
- 120: Anlagen- bzw. Prozessparameter
- 130: Optimierungsanwendung
- 131: erste Bestimmungseinheit
- 132: analytisches Modell
- 133: CFD-Modell
- 134: Einheit zum Bestimmen des derzeit in Verwendung befindlichen Betriebsparameters
- 135: Überprüfungseinheit
- 140: Informationen über Beschichtungsmaterial
- 141: Parameter
- 150: optimierter Betriebsparameter
- 200: Querschnitt
- 210: Upstream-Abschnitt
- 220: Downstream-Abschnitt
- B: Band
- D: Düse
- G: Beschichtungsspalt
- L: Lippenlänge
- U: Bahngeschwindigkeit
- 300: computer-implementiertes Verfahren
- 310: Schritt
- 320: Schritt
- 330: Schritt
- 400: computer-implementierte Vorrichtung
- 410: Erfassungseinheit
- 420: erste Bestimmungseinheit
- 430: zweite Bestimmungseinheit
- 500: System
- 510: computer-implementierte Vorrichtung
- 520: Computerprogrammprodukt

## Patentansprüche

1. Computer-implementiertes Verfahren (300) zum Bestimmen optimierter Betriebsparameter für einen Beschichtungsprozess, umfassend:
Erfassen (310) zumindest eines mit dem Beschichtungsprozess assoziierten Prozessparameters;
Bestimmen (320) eines mit einer Beschichtung, welche durch den Beschichtungsprozess hergestellt wird, assoziierten Soll-Parameterbereichs, wobei das Bestimmen auf einem analytischen Modell und/oder einem dreidimensionalen computational fluid dynamics, CFD, Modell basiert;
Bestimmen (330) eines Betriebsparameters für den Beschichtungsprozess zumindest teilweise basierend auf dem erfassten Parameter und dem Soll-Parameterbereich.

2. Computer-implementiertes Verfahren nach Anspruch 1, wobei das Erfassen ein Erfassen eines Echtzeit-Prozessparameters, eines statischen Parameters, welcher mit einer Beschichtungsanlage, welche den Beschichtungsprozess ausführt, assoziiert ist, und/oder einen für die Beschichtung verwendeten Materialparameter umfasst.

3. Computer-implementiertes Verfahren nach einem der Ansprüche 1 oder 2, wobei der Soll-Parameterbereich eine maximal tolerierbare Dickenschwankung der Beschichtung angibt.

4. Computer-implementiertes Verfahren nach einem der Ansprüche 1-3, wobei das analytische Modell eine den Beschichtungsprozess beschreibende physikalische Gesetzmäßigkeit umfasst und bevorzugt zumindest einen während des Beschichtungsvorgang auftretbaren Defekt beschreibt, bevorzugt eine Wellenbildung in der Beschichtung, einen Lufteinschluss in der Beschichtung und/oder eine Streifenbildung in der Beschichtung.

5. Computer-implementiertes Verfahren nach einem der Ansprüche 1-4, wobei das analytische Modell als Eingangsparameter zumindest eine Bahngeschwindigkeit, einen Beschichtungsspalt, eine Nassfilmdicke, eine Lippenlänge, eine Oberflächenspannung eines Beschichtungsmaterials, eine Dichte des Beschichtungsmaterials und/oder eine Viskosität des Beschichtungsmaterials in Abhängigkeit von einer Scherrate einbezieht.

6. Computer-implementiertes Verfahren nach einem der Ansprüche 1-5, wobei das Bestimmen des Soll-Parameterbereichs auf einem von dem dreidimensionalen CFD-Modell abgeleiteten Modell basiert und ein Dickenprofil der Beschichtung berücksichtigt.

7. Computer-implementiertes Verfahren nach einem der Ansprüche 1-6, wobei das Bestimmen des Soll-Parameterbereichs zumindest teilweise auf einer Betrachtung von physikalischen und/oder prozesstechnischen Grenzen basiert, bevorzugt bedingt durch ein air entrainment, einen minimalen Beschichtungsspalt, ein low flow limit und/oder eine maximale Nassfilmdicke.

8. Computer-implementiertes Verfahren nach einem der Ansprüche 1-7, ferner umfassend:
Erfassen eines gegenwärtig im Einsatz befindlichen Betriebsparameters für den Beschichtungsprozess;
Vergleichen des gegenwärtigen im Einsatz befindlichen Betriebsparameters mit dem bestimmten Betriebsparameters; und
Bestimmen, zumindest teilweise basierend auf dem Vergleichen, dass der gegenwärtig im Einsatz befindliche Betriebsparameter nicht dem bestimmten Betriebsparameter entspricht.

9. Computer-implementiertes Verfahren nach Anspruch 8, ferner umfassend:
Bereitstellen eines Hinweises, welcher indikativ dafür ist, dass der gegenwärtig im Einsatz befindliche Betriebsparameter keinen optimierten Betriebsparameter darstellt; und/oder Bereitstellen einer Empfehlung, dass der bestimmte Betriebsparameter zu einem im Vergleich zum gegenwärtig verwendeten Betriebsparameter zu einem verbesserten Prozessparameter führt; und/oder
Einstellen der Beschichtungsanlage auf den bestimmten Betriebsparameter.

10. Computer-implementiertes Verfahren nach einem der Ansprüche 1-9, wobei die Beschichtung zum Beschichten einer Anode und/oder einer Kathode einer Batterie verwendet wird.

11. Computer-implementiertes Verfahren nach einem der Ansprüche 1-10, wobei eine Dicke der Beschichtung 150-200 µm beträgt und eine Fluktuation der Dicke über eine Breite der Beschichtung hinweg kleiner als 2 µm ist.

12. Computerprogrammprodukt, umfassend Befehle, die bei der Ausführung des Computerprorammprodukts durch einen Computer diesen veranlassen, das Verfahren nach einem der Ansprüche 1 - 11 auszuführen.

13. Computer-implementierte Vorrichtung (400) zum Bestimmen optimierter Betriebsparameter für einen Beschichtungsprozess, umfassend:
Eine Erfassungseinheit (410) zum Erfassen zumindest eines mit dem Beschichtungsprozess assoziierten Parameters;
Eine erste Bestimmungseinheit (420) zum Bestimmen eines mit einer Beschichtung, welche durch den Beschichtungsprozess hergestellt wurde, assoziierten Soll-Parameterbereichs, wobei das Bestimmen auf einem analytischen Modell und/oder einem dreidimensionalem computational fluid dynamics, CFD, Modell basiert;
Eine zweite Bestimmungseinheit (430) zum Bestimmen eines Betriebsparameters für den Beschichtungsprozess zumindest teilweise basierend auf dem erfassten Parameter und dem Soll-Parameterbereich.

14. Computer-implementierte Vorrichtung nach Anspruch 13, ferner umfassend:
Eine Ausführungseinheit zum Ausführen des computer-implementierten Verfahrens nach einem der Ansprüche 1-11; und/oder
Eine Ausführungseinheit zum Ausführen des Computerprogrammprodukts nach Anspruch 12.

15. System (500) zum Bestimmen optimierter Betriebsparameter für einen Beschichtungsprozess, umfassend:
Die computer-implementierte Vorrichtung (510) nach einem der Ansprüche 13 oder 14; und
das Computerprogrammprodukt (520) nach Anspruch 12.
